# EUROPÄISCHE PATENTSCHRIFT

(11) **EP 3 177 446 B1**
(45) Veröffentlichungstag und Bekanntmachung des Hinweises auf die Patenterteilung: **02.05.2018**
(21) Anmeldenummer: 15738070.0
(22) Anmeldetag: 14.07.2015
(51) Int. Cl.: B29C 47/00, B29C 67/00, B29C 45/27

(54) **GRANULATKÖRNER/FLÜSSIGKEITSFLUSSEINSTELLVORRICHTUNG FÜR VON GRANULATKÖRNERN UND/ODER FLÜSSIGKEITEN GESPEISTE 3-D DRUCKERKÖPFE UND ENTSPRECHENDES VERFAHREN**
GRANULE/LIQUID FLOW ADJUSTING DEVICE FOR 3-D PRINTER HEADS SUPPLIED WITH GRANULES AND/OR LIQUIDS AND CORRESPONDING PROCESS
DISPOSITIF D'AJUSTEMENT DE FLUX DE LIQUIDE/GRANULÉS POUR TÊTES D'IMPRESSION 3-D ALIMENTÉS EN GRANULÉS ET/OU LIQUIDE ET PROCEDE CORRESPONDANT

(30) Priorität: 05.08.2014 IT BZ20140029
(43) Veröffentlichungstag der Anmeldung: 14.06.2017
(73) Patentinhaber: Starfort des Stubenruss Moritz, 39042 Bressanone (IT)
(72) Erfinder: STUBENRUSS, Moritz, I-39042 Bressanone (IT)
(74) Vertreter: Schmidt, Steffen J.
(86) Internationale Anmeldenummer: PCT/EP2015/066023
(87) Internationale Veröffentlichungsnummer: WO 2016/020150

(56) Entgegenhaltungen:
- US-A- 5 656 230
- US-A1- 2002 113 331

## Beschreibung

Die vorliegende Erfindung bezieht sich auf eine Granulatkörner/Flüssigkeitsflusseinstellvor richtung für von Granulatkörner und/oder Flüssigkeiten gespeiste 3-D Druckerköpfe und auf ein entsprechendes Verfahren. Aus der Schrift US 20120237631 ist ein Schneckenzufuhrystem für 3-D Drucker bekannt, die durch Granulatkörner gespeist werden. Während des Betriebes des Druckers stellte sich oftmals das Problem der Wärmeübertragung vom Druckerkopf auf die zugeführten Granulatkörner. Dies beträgt ein Ankleben der Granulatkörner im Zufuhrkanal des Druckerkopfes und/oder in der Zufuhrschnecke. Dieses Ankleben der Granulatkörner kann einen unregelmäßigen Materialfluss insbesondere bei Granulatkörnern aus Kunststoff verursachen. Bei unregelmäßigem Materialfluss in Richtung des Druckerkopfes stellt sich das Problem der Ausbildung einer unregelmäßigen Schicht mit der Folge einer unterschiedlichen Stärke des angewandten Materials. Zum Beispiel in einem Abschnitt könnte die Stärke kleiner sein, während sie in einem zweiten Abschnitt ein Übermaß besitzt.

Die Aufgabe der vorliegenden Erfindung ist die Ausführung einer Granulatkörner/Flüssigkeitsflusseinstellvor richtung für von Granulatkörnern und/oder Flüssigkeiten gespeiste 3-D Druckerköpfe, insbesondere für Granulatkörner aus Kunststoff. Die US5656230 offenbart ein 3D Extrusionsverfahren und eine Vorrichtung dafür. Die Aufgabe wird durch eine Vorrichtung gemäß Anspruch 1 und einem Verfahren gemäß Anspruch 15 gelöst. Die erfindungsgemäße Vorrichtung wird in einen von Granulatkörnern und/oder Flüssigkeiten gespeisten 3-D Druckerkopf eingebracht. Der 3-D Druckerkopf wird über einen Kanal mit Granulatkörnern aus Kunststoff und/oder Flüssigkeiten zum Beispiel aus Kunststoff gespeist. Der Zufuhrkanal leitet die Granulatkörner und/oder Flüssigkeiten in eine Kammer, die an der unteren Seite eine Heizplatte mit einer Öffnung aufweisen kann, wo das geschmolzene oder flüssige Material austreten kann. Im Wesentlichen auf der Öffnung zentriert und auf der Platte anliegend befindet sich gemäß der Erfindung eine Spiralschnecke. Diese Schnecke wird mittels eines Antriebs zum Beispiel einer Antriebsscheibe betätigt, die mit einem Antrieb verbunden ist, der ein Elektromotor sein kann. Zwischen dem Antrieb und der Radialschnecke ist bevorzugter Weise eine drehfeste Kupplung zwischengeschaltet. Zwischen der Spiralschnecke und dem Antrieb ist überdies ein Federelement zwischengeschaltet um auf die Spiralschnecke eine Kraft einwirken zu lassen. Dieses Federelement kann zum Beispiel eine Feder sein. In einer weiteren Ausführungsform kann die Kraft durch ein Gewicht und/oder durch das Eigengewicht des Antriebs erzeugt werden.

Die stirnseitige Spiralschnecke leitet das Material in Richtung der Öffnung oder bringt es wieder in die der Öffnung, abgewandten Richtung. Wird der Druck zwischen der Heizplatte und der Spiralschnecke zu groß und daher zu viel Material wird über die Öffnung ausgestoßen, so wird das Federelement zusammengedrückt und die Spiralschnecke erhebt sich. Auf diese Art und Weise entfernt sich die Spiralschnecke in Abhängigkeit des Druckes von der Heizplatte und ihre Wirksamkeit nimmt in Abhängigkeit des Druckers ab.
In einer weiteren Ausführungsform wird die Heizplatte gedreht und die Spiralschnecke bleibt still stehend.

In diesem Fall ist die stirnseitige Platte mit dem Antrieb verbunden.
In einer weiteren Ausführungsform wird der Druck erfasst und die Geschwindigkeit der Spiralschnecke und/oder der stirnseitigen Heizplatte wird in Abhängigkeit des Druckes eingestellt um einen konstanten Materialfluss zu erzielen.
Die Merkmale und Einzelheiten der Granulatkörnerflusseinstellvorrichtung für von Granulatkörnern gespeiste 3-D Druckerköpfe gehen aus den Patentansprüchen und aus der folgenden Beschreibung eines bevorzugten Ausführungsbeispiels hervor, das in der beigefügten Zeichnung dargestellt ist. Es zeigen:

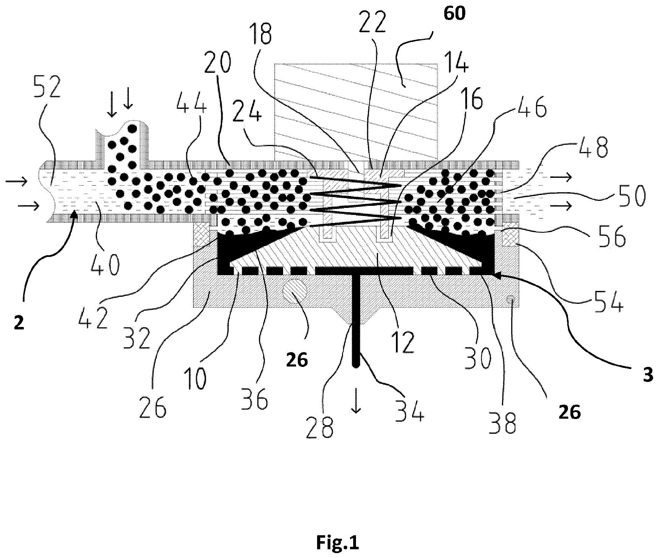

Figur 1 einen Querschnitt einer Granulatkörnerflusseinstellvorrichtung für von Granulatkörnern gespeiste 3-D Druckerköpfen gemäß der Erfindung mit der Bezugsziffer 1,

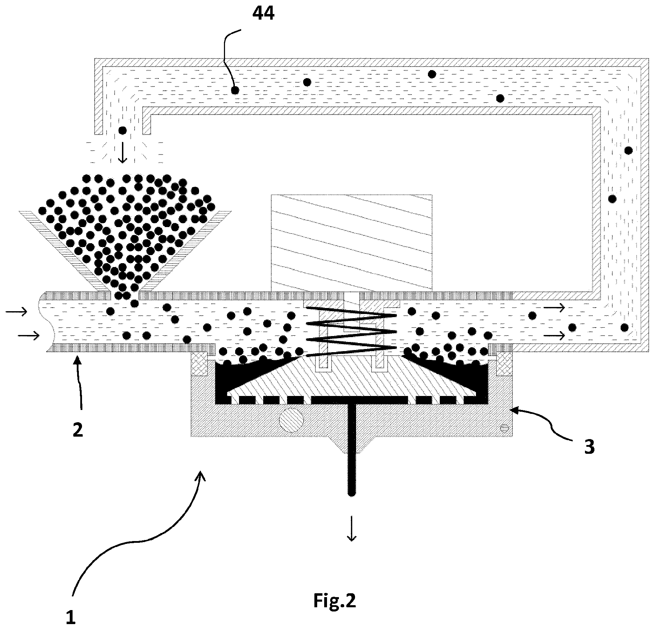

Figur 2 einen Querschnitt einer Granulatkörnerflusseinstellvorrichtung für von Granulatkörnern gespeiste 3-D Druckerköpfen,

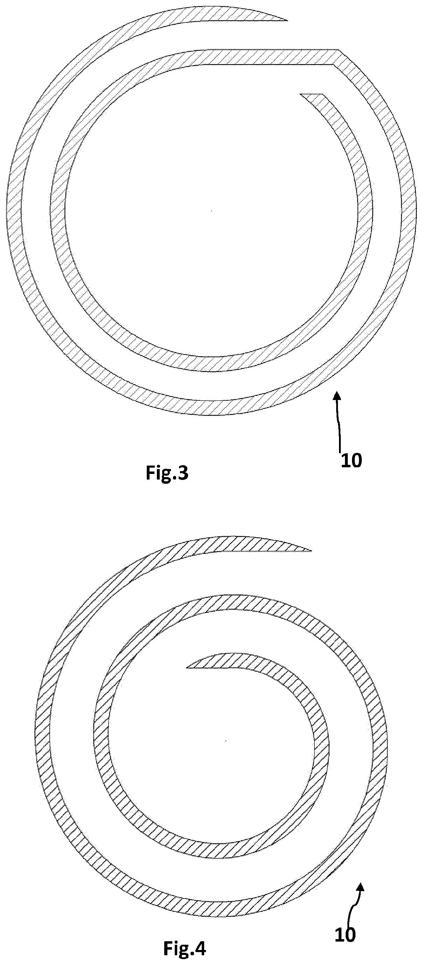

Figur 3 eine Stirnansicht einer Spiralschnecke,
Figur 4 eine Stirnansicht einer weiteren Spiralschnecke,
Figur 5 einen Querschnitt eine weitere Ausführungsform einer Granulatkörnerflusseinstellvorrichtung für von Granulatkörnern gespeiste 3-D Druckerköpfen gemäß der Erfindung mit der Bezugsziffer 300,
Figur 6 eine Ansicht von unten einer weiteren Spiralschnecke,
Figur 7 eine 3-D Ansicht von Figur 6 einer Spiralschnecke,
Figur 8 eine 3-D Ansicht einer Heizplatte,
Figuren 9a eine Seitenansicht, 9b eine Frontalansicht und 9c eine Ansicht von oben von einer weiteren Spiralschnecke,
Figur 10a eine Seitenansicht, 10b eine Frontalansicht und 10c eine Ansicht von oben von einer weiteren Spiralschnecke, und
Figur 11 einen Querschnitt einer weiteren Ausführungsform einer Granulatkörnerflusseinstellvorrichtung für von Granulatkörnern gespeiste 3-D Druckerköpfen gemäß der Erfindung, mit der Bezugsziffer 400.

Im Fall der vorliegenden Extrudereinheit ist für den Transport und die Mischung des zu extrudierenden Kunststoffes keine Zylinderschnecke vorgesehen, sondern eine Spiralschnecke im deren spiralförmigem Kanal das Material befördert wird. Die Spiralschnecke 10 ist radial aus einer Scheiben 12 ausgenommen. Diese Scheibe 12 ist mit einer Kupplung 14 verbunden, die zwischen den Zähnen 16 und axialen Ausnehmungen der Scheibe 12 der Art in Eingriff steht, dass die Scheibe 12 mit der Kupplung 14 drehfest, jedoch axial verstellbar, verbunden ist. Zwischen der Kupplung 14 und der Stirnseite der Scheibe ist eine Schraubenfeder 24 gespannt. Die Kupplung 14 ist mit einer Antriebswelle 18 eines, schematisch dargestellten Antriebs 60 fest verbunden. Überdies kann die Kupplung 14 am Gehäuse 20 über einen Gleitverbindung 22 verschoben werden, welche die Axiallast aufnimmt und die Wärme am Gehäuse 20 abfließen lässt.

Die Feder 24 drückt die Scheibe 12 und daher die Schnecke 10 gegen eine Heizplatte 26, die auf bekannte Art und Weise durch eine Wärmequelle erhitzt wird und deren Temperatur durch ein Thermometer überwacht wird. Wird die Schnecke 10 in Drehung versetzt, so wird der Kunststoff vorgeschoben. Der Kunststoff kann je nach Drehrichtung in Richtung der Austrittsöffnung 28 oder von dieser weg verdrängt werden. Die Federkraft dämpft die Schwingungen am Austritt 34 des Materials, der bevorzugter Weise durch eine Düse gebildet wird, die auf dem Gebiet der herkömmlichen Extrudern bekannt ist. Ist der Druck zwischen der Schnecke 10 mit ihrer Scheibe 12 und der Heizplatte 26 zu hoch, und wird so zu viel Kunststoff 32 ausgestoßen, so wird die Schnecke 10 mittels ihrer Scheibe 12 angehoben, wobei die Wirksamkeit der Schnecke 10 herabgesetzt wird. Mit der Anhebung der Schnecke 10 mittels ihrer Scheibe 12 hat der Kunststoff die Möglichkeit in einem Kanalabschnitt 30 zu fließen, der ganz außen liegt, mit der Wirkung, dass der Druck herabgesetzt wird. Der elastische Druck, die Drehgeschwindigkeit und die Abmessung der Austrittsöffnung 28 sollten derart gewählt werden, dass die Schnecke 10 sich mit ihrer Scheibe 12 in Anwesenheit eines mittleren Druckes leicht von der Gegenfläche abhebt, damit mit abnehmendem Druck eine Erhöhung der Wirksamkeit möglich ist. Die Schnecke 10 mit ihrer Scheibe 12 und die Heizplatte 26 können auch kegelförmig sein.

Der Kunststoff 32 schmilzt schon an der oberen Seite 36 und/oder seitlich zur Schnecke 10 mit Scheibe 12 und fließt von dort in Richtung des Eingangs 38 des Kanals. Die flache Bauart der Schnecke 10 besitzt im Bereich des Außeneingangs 38 des Kanals, wo der geschmolzene Kunststoff gesammelt wird, einen Außendurchmesser, der im Wesentlichen größer ist gegenüber einer zylindrischen Schnecke, was die Zufuhr des Kunststoffes verbessert, wenn der Kunststoff 32 zuvor geschmolzen wird.

Beim Spritzgießen oder bei Standardkonstruktionen der 3 D Druckerköpfe schmilzt der Kunststoff zwischen der Förderschnecke und dem Zylinder. Das Schmelzen auf einer verhältnismäßig großen Fläche vor dem Eingang in die Schnecke hat den Vorteil, dass das im Kunststoff enthaltene Wasser leichter abfließen kann und damit die Blasenbildung herabgesetzt wird.

Oberhalb des Schmelzbades strömt ein Kühlstromfluss 40, der die Feuchtigkeit abführt und zugleich das Granulat vor dem Eintauchen ins Schmelzbad 42 abkühlt, damit es nicht verklumpt und nicht den Nachschub von Granulat 44 des Kunststoffes gefährdet.

Der Luftstrom kühlt auch das Gehäuse oder die Kammer oberhalb des Schmelzbades, damit die Wärme der Heizplatte 26 und des Kunststoffes 32 nicht voll den Bestandteilen übertragen wird, deren Erhitzung von Nachteil sein könnte. Dieser Effekt kann durch Kühlrippen 46 an der Innenseite erhöht werden. Der Bereich, wo der Luftstrom 40 aus dem Gehäuse austritt, ist derart aufgebaut, dass das Kunststoffgranulat 44 im Gehäuse 20, zum Beispiel in der Form eines Gitters 48 verbleibt.

Das Kunststoffgranulat 44 kann unmittelbar aus dem Gehäuse 40 eingebracht werden.
Dem Kunststoffgranulat 44 kann Material wie eine Faser beigemischt werden, zum Beispiel eine Glasfaser. Auf diese Art und Weise erhöht man die Festigkeit oder andere Merkmale des Endprodukts.

Der Bereich, wo der Luftstrom 40 das Gehäuse 20 verlässt (Ausgang des Luftstromes 50), kann auch derart aufgebaut sein, dass das Kunststoffgranulat 44 zurückgebracht werden kann. Im Gehäuse 20, oberhalb des Schmelzbades 42, verbleibt eine gewünschte Menge an Kunststoffgranulat 44, der Rest wird von neuem weggeblasen und in den Granulatspeicher gefördert, wo er von neuem zum Luftstrom aufgenommen werden kann, der ihn zuvor in Richtung des Gehäuses 20 gefördert hatte. Dies hat den Vorteil, dass große Abstände vom Granulatspeicher bis zum Extruder überbrückt werden können, ohne dass große Schwingungen der Granulatzufuhr an Kunststoff 44 und an Kühlluft 52 eintreten, was zum Beispiel durch Stau von Kunststoffgranulat 44 natürlicherweise am Gitter 48 vorkommen kann.

Das gekühlte Gehäuse 20 und die erhitzte Heizplatte 26 bestehen aus gut wärmeleitenden Materialien, sind jedoch voneinander thermisch mittels eines Wärmeisolators 54 isoliert. Im Bereich der Innenseite des Gehäuses 20 sind dieses und die Heizplatte 24 zu einander angenähert, damit der Kunststoff 32 einen Kontakt im flüssigen Zustand besitzt oder sich nicht durch Schmelzung anbindet, um ein Anschweißen zu vermeiden. Damit das thermisch isolierende Material für die Isolierung ausreichend breit sein kann, können das Gehäuse 20 und die Heizplatte 26 mit Lippen auf der Innenseite zusammengebracht werden.

Unter den Vorteilen gegenüber dem Druckerkopf, der das Material aus Kunststofffilamenten bezieht, ist die Tatsache anzugeben, dass der Kunststoff einen im Wesentlichen niedrigeren Anschaffungspreis hat und dass die Auswahl von verschiedenen Kunststoffen beim Granulat im Wesentlichen umfangreicher ist. Zum Beispiel mit Glasfasern verstärktes Polyamid, das sehr stabil ist und im Wesentlichen weniger schrumpft, sobald es abkühlt, und zu einem besseren Druckgussergebnis führt. Der Rohstoff kann vorgetrocknet werden, was bei den Filamenten zu Bruch führen kann, die beim Erreichen des Triebrades zum Druckabbruch führen. Das Trocknen des Kunststoffes verringert die Blasenbildung bei der Verarbeitung. Der Druckvorgang ist nicht auf eine Filamentlänge beschränkt, die nur wenige kg umfasst. Drucker, die Industriegranulat verarbeiten, sind so gut wie nicht erhältlich, da sie hauptsächlich Eigenbauten sind, die in der Regel Kunststoffe mit einer niedrigen Verarbeitungstemperatur verarbeiten, die schwache mechanische Eigenschaften aufweisen. Es gibt das Problem mit der Wärmedämmung, was zu einer unerwünschten Verklebung des Granulats führen kann. Dies kann zum Abbruch der Materialzufuhr führen. Ein weiteres Problem ist das unregelmäßige Ausstoßen des Materials, vor allem bei Kunststoffen mit relativ hoher Verarbeitungstemperatur, was durch viele Faktoren im Schmelzbereich verursacht wird und zu einem in der Regel nicht brauchbaren Resultat führt.

In einer bevorzugten Ausführungsform 300 wird im Druckerkopf ein Tastsensor 200 eingefügt. Dieser Tastsensor 300 erfasst die Höhe des Materials innerhalb des Druckerkopfes und drosselt bei Überschreiten einer vorgegebenen Materialhöhe die Materialzufuhr. Zum Beispiel wird die Geschwindigkeit der Zuführeinheit 201 gedrosselt oder komplett eingestellt.

In einer vorteilhaften Ausführung ist zumindest ein Verschlusselement 299 bei der Zuführeinheit für Material 201 an der Kammer angebracht, um das Austreten von Gas zu reduzieren.
In einer vorteilhaften Ausführung ist dieser Tastsensor 200 ein L-förmiges Element, welche drehbar am Druckerkopf gelagert ist.
In einer weiteren Ausführungsform kann durch eine Zuführeinheit 100 Gas in den Druckerkopf eingeführt werden zum Beispiel Argon. Durch diese Gaszufuhr wird das Granulat, welches erhitzt wird, vor einem Kontakt mit der Umgebungsluft isoliert. Durch diese Isolation wird eine Reaktion mit der Luft verhindert. Außerdem kann dieses Gas vorteilhafte Eigenschaften in Bezug auf die Wärmeleitung besitzen.
In einer bevorzugten Ausführungsform 300 wird im Druckerkopf ein oder mehrere Verschlusselement 299 bei der Materialzufuhr angebracht. Diese können in Serie angebracht werden, um zu verhindern, dass Luft in die Kammer des Druckerkopfes eintritt.

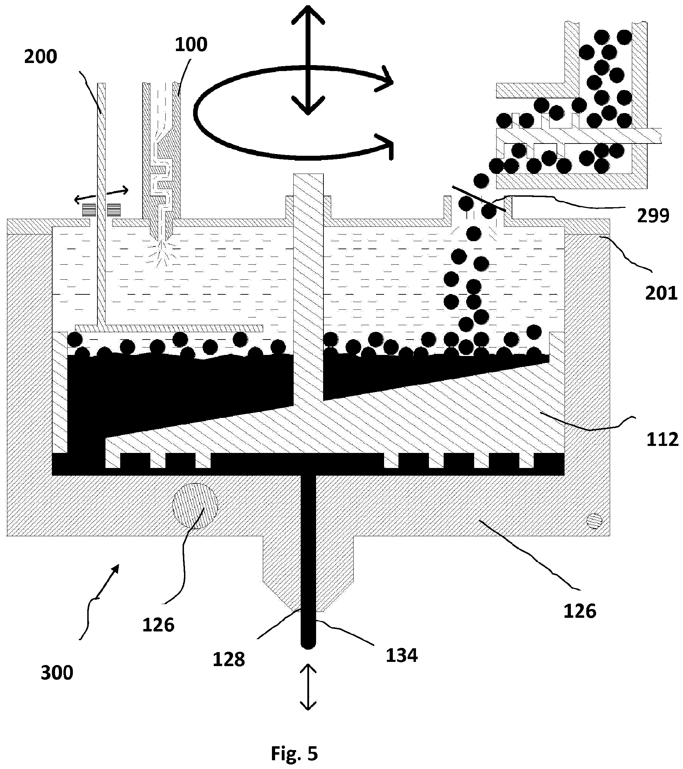

In der Figur 5 ist die Scheibe 112 so realisiert, dass sie sich nicht gegen die Mitte hin erhebt sondern gegen eine Seite. Durch die Drehung der Scheibe 112 wird so ein kontinuierlicher Fluss erzeugt und es wird verhindert, dass der Kunststoff mit der Seitenwand der Kammer in Kontakt kommt. Ein Kontakt zwischen der Außenwand und dem Material kann zu Knorpelbildung führen oder Material welches dem Granulat zugegeben wird wie Glasfasern aussondern.

Die Scheibe kann sowohl eine Rotationsbewegung als auch eine vertikale Bewegung ausführen. Diese vertikale Bewegung führt erfindungsgemäß weg von der Heizplatte 126, wenn ein zu hoher Druck auf dem füßigen Kunststoff lastet, und daher zu viel Material 134 aus dem Druckerkopf austritt, und sie nähert sich der Heizplatte 126, wenn der Druck auf den füßigen Kunststoff sinkt.

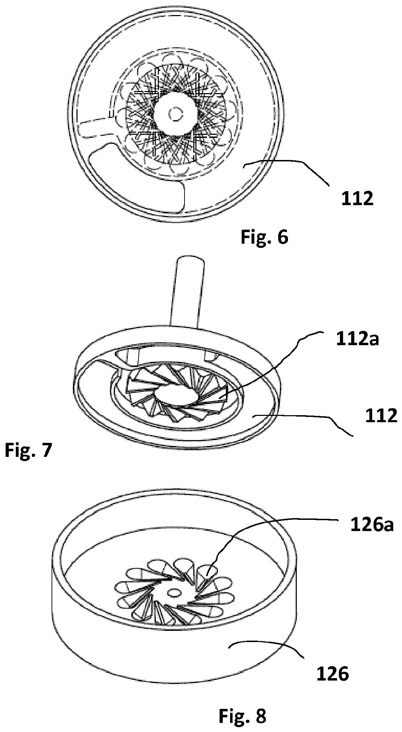

In den Figuren 6 und 7 ist eine besonders vorteilhafte Scheibe 112 dargestellt. Durch die Erhebungen 112a wird das Material kontinuierlich in Richtung der Austrittsöffnung 128 geschoben.

In Figur 8 sind in der Heizplatte Ausnehmungen 126a dargestellt. Diese erlauben auf vorteilhafter Weise, den Materialzufluss zur Austrittöffnung zu verbessern.

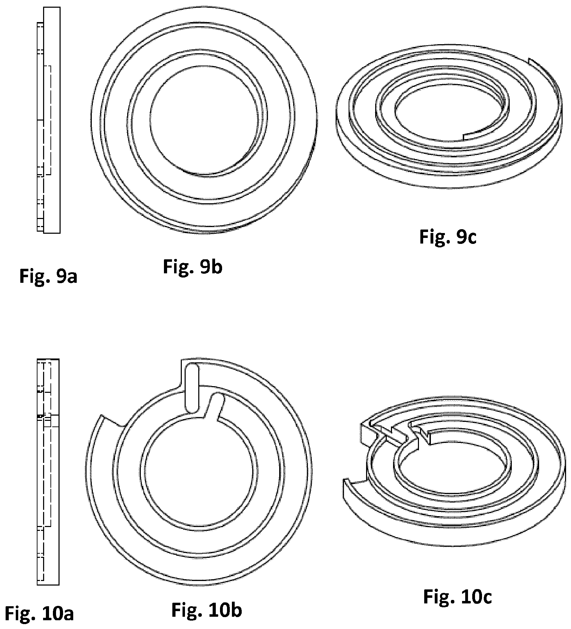

In den Figuren 9a,9b,9c und 10a,10b,10c sind weitere vorteilhafte Scheiben 112 dargestellt. Diese Scheiben optimieren den Zufluss des Materials zur Austrittsöffnung durch vorgegebene Kanäle, die durch ihre spiralförmige Anordnung die Einstellung der Menge des Austrittsmaterial unterstützen.

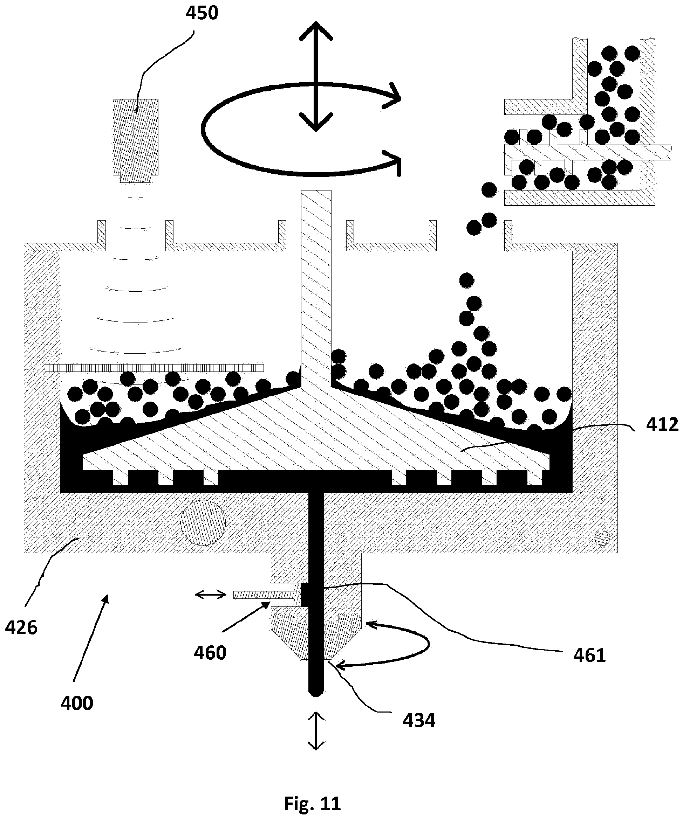

In Figur 11 ist ein weiterer erfindungsgemäßer Druckerkopf 400 dargestellt. Dieser umfasst zum Beispiel ein Ultraschallgerät oder ein Infrarotgerät 450, um die Materialhöhe festzustellen und damit die Zufuhr zu regulieren. Der Druckerkopf 400 umfasst eine Absaugeinheit 460. Diese ist unmittelbar über der Austrittsöffnung 434 angeordnet. Die Absaugeinheit 460 umfasst eine Kammer 461, welche mit dem Austrittskanal 462 den Innenraum des Druckerkopfes 400 mit der Austrittöffnung 434 verbindet.

In der Kammer 461 ist ein Kolben 463 verschiebbar angeordnet. Dieser Kolben ist mit einem Aktuator verbunden. Beim Beenden des Druckvorgangs wird er aktiviert, um ein Abtropfen des Materials zu verhindern, so verschiebt sich der Kolben und erlaubt der Kammer 461 Material aufzunehmen. Bei Wiederaufnahme des Druckvorgangs wird das Material wieder in den Kanal geschoben.
Dadurch, dass sich die Kammer 461 in Kontakt mit der Heizplatte 426 befindet, bleibt das Material flüssig.

In einer weiteren vorteilhaften Ausführungsform der Erfindung ist die Austrittsöffnung 434 derart ausgebildet, dass sie sich um die eigene Achse drehen kann. Auf diese Art und Weise wird das Material, das durch die Austrittsöffnung 434 austritt, in Drehung versetzt. Dadurch kann der Materialstrahl besser zum Beispiel bei bogenförmigen Druckformen eingesetzt werden.
Außerdem wird das Material durch die Drehung verschnürt und man vermeidet eine Fadenbildung.
Beim abschließen des Druckvorgangs wird durch die Drehung der Austrittsöffnung eine Sollbruchstelle erzeugt.
In einer nicht dargestellten Ausführungsform wird anstelle von Granulat ein flüssiger Zweikomponentenkunstoff verwendet. Dieser wird auch über die Schnecke der Austrittsöffnung zugeführt.
In einer bevorzugten Ausführungsform ist ein UV Strahler am Druckerkopf angebracht. Durch diesen kann ein Kunststoff, der durch den Druckerkopf austritt, gehärtet werden.

### Bezugsziffern

Druckerkopf 1
Gaszufuhr 2
Innenraum 3
Spiralschnecke 10
Scheibe 12
Kupplung 14
Zähnen 16
Antriebswelle 18
Gehäuse 20
Gleitverbindung 22
Feder 24
Heizplatte 26
Austrittsöffnung 28
Kanalabschnitt 30
Kunststoff 32
Austritt 34
oberen Seite Scheibe 36
Eingangs des Kanals 38
Kühlstromfluss 40
Schmelzbades 42
Kunststoffgranulat 44
Kühlrippen 46
Gitter 48
Luftstromes 50
Kühlluft 52
Wärmeisolators 54
Antrieb 60
Zuführeinheit von Gas 100
Scheibe 112
Erhebung 112a
Heizplatte 126
Ausnehmung 126a
Austrittsöffnung 128
Material 134
Tastsensor 200
Zuführeinheit Material 201
Verschlusselement 299
Druckerkopf 300
Druckerkopf 400
Schnecke 412
Heizplatte 426
Austrittsöffnung 434
Ultraschallgerät Infrarotgerät 450
Absaugeinheit 460
Kammer 461
Austrittskanal 462
Kolben 463

## Patentansprüche

1. Granulatkörner/Flüssigkeitsflusseinstellvorrichtung für von Granulatkörnern und/oder Flüssigkeiten gespeiste 3-D Druckerköpfe und 3-D Druckerkopf (1), wobei die Granulatkörner/Flüssigkeitsflusseinstellvorrichtung in dem über einen Kanal (2) gespeisten 3-D Druckerkopf (1) angeordnet ist, wobei
- der Druckerkopf eine Kammer (3) umfasst, wobei
-- die Kammer (3) eine Fläche (26) aufweist und
--- diese Fläche (26) mindestens eine Austrittsöffnung (28, 128, 434) aufweist, wobei
- innerhalb der Kammer (3) mindestens eine Spiralschnecke (10, 12, 112, 412) angeordnet und dazu eingerichtet ist, das Material (32, 34), bevorzugterweise Kunststoff, der mindestens einen Austrittsöffnung (28, 128, 434) zuzuführen, und
- ein Krafterzeuger vorgesehen und dazu eingerichtet ist die Spiralschnecke (10, 12, 112, 412) in Richtung der Fläche (26) mit einer Kraft zu beaufschlagen, und
- der Abstand zwischen der Spiralschnecke (10, 12, 112, 412) und der Fläche (26) durch den Druck des zuzuführenden Materials (32, 34) einstellbar ist.

2. Vorrichtung nach einem der vorstehenden Ansprüche, **dadurch gekennzeichnet,**
**dass** das Material Granulat ist und die Fläche (26) beheizbar ist, oder,
**dass** das Material flüssiger Zweikomponenten-Kunststoff ist.

3. Vorrichtung nach einem der vorstehenden Ansprüche, **dadurch gekennzeichnet,**
**dass**
der Krafterzeuger als eine auf die Spiralschnecke (10, 12, 112, 412) wirkende Feder ausgebildet ist, oder der Krafterzeuger als ein Gewicht und/oder das Eigengewicht eines Antriebs (60) der Spiralschnecke (10, 12, 112, 412) ausgebildet ist.

4. Vorrichtung nach einem der Ansprüche 1 bis 2, **dadurch gekennzeichnet, dass**
der Krafterzeuger als ein auf die Spiralschnecke (10, 12, 112, 412) wirkendes magnetisches oder elektromagnetisches Element ausgebildet ist.

5. Vorrichtung nach einem der vorstehenden Ansprüche, **dadurch gekennzeichnet,**
**dass**
die Relativgeschwindigkeit zwischen der unteren Fläche (26) und der Spiralschnecke (10, 12, 112, 412) in Abhängigkeit von dem Druck des Materials (32, 15, 34) einstellbar ist.

6. Vorrichtung nach einem der vorstehenden Ansprüche, **dadurch gekennzeichnet, dass** am Druckkopf eine UV-Lampe zur Härtung des Kunstoffes angebracht ist.

7. Vorrichtung nach einem der vorstehenden Ansprüche,
**dadurch gekennzeichnet, dass**
die Spiralschnecke mit ihrer Scheibe (12) und die Fläche (26) der Kammer (3) kegelförmig sind.

8. Vorrichtung nach einem der vorstehenden Ansprüche, **dadurch gekennzeichnet,**
**dass**
zumindest eine Absaugeinheit (460) über der Austrittsöffnung angeordnet ist, wobei die Absaugeinheit (460) eine Kammer (461) umfasst, welche durch einen Austrittskanal (462) einen die Spiralschnecke (10, 12, 112, 412) enthaltenden
Innenraum des Druckerkopfs mit der Austrittöffnung verbindet, wobei in der Kammer (461) ein mit einem Aktuator verbundener Kolben (463) verschiebbar angeordnet ist.

9. Vorrichtung nach einem der vorstehenden Ansprüche, **dadurch gekennzeichnet,**
**dass** die Vorrichtung zumindest einen Sensor zur Messung der Materialhöhe im Innenraum (3)
aufweist.

10. Vorrichtung nach Anspruch 9, **dadurch gekennzeichnet, dass**
der Sensor ein Tastsensor (200) ist.

11. Vorrichtung nach Anspruch 9, **dadurch gekennzeichnet, dass**
der Sensor ein Ultraschallgerät oder ein Infrarotgerät (450) ist.

12. Vorrichtung nach einem der vorstehenden Ansprüche,
**gekennzeichnet durch** eine Zuführeinheit (100) für Gas zum Zuführen von Gasin den Innenraum (3).

13. Vorrichtung nach Anspruch 11, **dadurch gekennzeichnet, dass**
zumindest ein Verschlusselement (299) bei der Zuführeinheit für Material (201) an der Kammer (3) angebracht ist um das Austreten von Gas zu reduzieren.

14. Vorrichtung nach einem der vorstehenden Ansprüche, **dadurch gekennzeichnet,**
**dass** die Austrittsöffnung (28, 128, 434) drehbar ist.

15. Verfahren zum Speisen eines 3-D Druckerkopfes mit Granulatkörnern und/oder Flüssigkeiten, mit den Schritten:
- Leiten der Granulatkörner und/oder Flüssigkeiten durch einen Zufuhrkanal in eine Kammer mit einer eine Öffnung aufweisenden Platte, wobei durch die Öffnung aus den Granulatkörnern und/oder Flüssigkeiten erhaltenes, geschmolzenes oder flüssiges Material austreten kann;
- Einwirkenlassen einer axialen Kraft auf eine in der Kammer angeordnete Spiralförderschnecke;
- Leiten des Materials in Richtung der Öffnung oder Bringen des Materials wieder in eine von der Öffnung abgewandte Richtung durch Rotieren der Spiralschnecke relativ zu der Platte, wobei bei zu großem Druck des Materials sich die Spiralschnecke gegen die einwirkende axiale Kraft erhebt und die Wirksamkeit der Spiralschnecke abnimmt.

## Claims

1. A granule/liquid flow adjusting device for 3D printer heads and 3D printer head (1) supplied with granules and/or liquids, wherein the granule/liquid flow adjusting device is arranged in the 3D printer head (1) fed via a channel (2), wherein
- the printer head comprises a chamber (3), wherein
-- the chamber (3) has a surface (26) and
--- said surface (26) has at least one outlet opening (28, 128, 434), wherein
- at least one spiral scroll (10, 12, 112, 412) is arranged within the chamber (3) and is configured to feed the material (32, 34), preferably plastic, to the at least one outlet opening (28, 128, 434), and
- a force generator is provided and configured to apply a force to the spiral scroll (10, 12, 112, 412) toward the surface (26), and
- the distance between the spiral scroll (10, 12, 112, 412) and the surface (26) is adjustable by means of the pressure of the material (32, 34) to be fed.

2. The device as set forth in one of the preceding claims, **characterized in that** the material is granulate and the surface (26) is heatable, or, that the material is liquid two-component plastic.

3. The device as set forth in one of the preceding claims, **characterized in that** the force generator is designed as spring acting on the spiral scroll (10, 12, 112, 412), or the force generator is designed as a weight and/or the tare weight of a drive (60) of the spiral scroll (10, 12, 112, 412).

4. The device as set forth in one of the claims 1 to 2, **characterized in that** the force generator is designed as magnetic or electromagnetic element acting on the spiral scroll (10, 12, 112, 412).

5. The device as set forth in one of the preceding claims, **characterized in that** the relative speed between the lower surface (26) and the spiral scroll (10, 12, 112, 412) is adjustable as a function of the pressure of the material (32, 15, 34).

6. The device as set forth in one of the preceding claims, **characterized in that** a UV lamp is mounted on the printing head in order to harden the plastic.

7. The device as set forth in one of the preceding claims, **characterized in that** the spiral scroll with its disc (12) and the surface (26) of the chamber (3) are cone-shaped.

8. The device as set forth in one of the preceding claims, **characterized in that** at least one suction unit (460) is arranged above the outlet opening, wherein the suction unit (460) comprises a chamber (461), which connects an interior space of the printer head containing the spiral scroll (10, 12, 112, 412) with the outlet opening by an outlet channel (462), wherein in the chamber (461) a piston (463) connected to an actuator is movably arranged.

9. The device as set forth in one of the preceding claims, **characterized in that** the device has at least one sensor for measuring the material height in the interior space (3).

10. The device as set forth in claim 9, **characterized in that** the sensor is a tactile sensor (200).

11. The device as set forth in claim 9, **characterized in that** the sensor is an ultrasonic device or an infrared device (450).

12. The device as set forth in one of the preceding claims, **characterized by** a feed unit (100) for gas for feeding of gas into the interior space (3).

13. The device as set forth in claim 11, **characterized in that** at least one closure element (299) is disposed on the chamber (3) at the feed unit for material (201) in order to reduce the leaking of gas.

14. The device as set forth in one of the preceding claims, **characterized in that** the outlet opening (28, 128, 434) is rotatable.

15. Method for supplying of a 3D printer head with granules and/or liquids, comprising the steps:
- conducting the granules and/or liquids by a feed channel into a chamber with a plate having an opening, wherein the melted or liquid material obtained from the granules and/or liquids can discharge through the opening;
- applying of an axial force to a spiral scroll arranged in the chamber;
- conducting the material in direction towards the opening or conducting the material again in a direction away from the opening by rotating the spiral scroll relative to the plate, wherein the spiral scroll elevates against the applied force upon too much pressure of the material and the effectiveness of the spiral scroll diminishes.

## Revendications

1. Dispositif d'ajustement de flux de liquide/granulés destiné à des têtes d'impression 3D alimentées en granulés et/ou liquides et tête d'impression 3D (1), le dispositif d'ajustement de flux de liquide/granulés étant disposé dans la tête d'impression 3D alimentée par l'intermédiaire d'un canal (2), dans lequel
- la tête d'impression comporte une chambre (3),
-- la chambre (3) présentant une surface (26) et
--- cette surface (26) présentant au moins un orifice de sortie (28, 128, 434), dans lequel
- au moins une vis sans fin en spirale (10, 12, 112, 412) est disposée à l'intérieur de la chambre (3) et conçue pour amener la matière (32, 34), de préférence une matière plastique, à l'au moins un orifice de sortie (28, 128, 434), et
- un générateur de force est prévu et conçu pour soumettre la vis sans fin en spirale (10, 12, 112, 412) à une force en direction de la surface (26), et
- la distance entre la vis sans fin en spirale (10, 12, 112, 412) et la surface (26) est ajustable par la pression de la matière à amener (32, 34).

2. Dispositif selon l'une des revendications précédentes, **caractérisé en ce que** la matière est un granulat et la surface (26) peut être chauffée, ou **en ce que** la matière est une matière plastique à deux constituants liquide.

3. Dispositif selon l'une des revendications précédentes, **caractérisé en ce que** le générateur de force est conçu sous la forme d'un ressort agissant sur la vis sans fin en spirale (10, 12, 112, 412), ou le générateur de force est conçu sous la forme d'un poids et/ou du poids net d'un entraînement (60) de la vis sans fin en spirale (10, 12, 112, 412).

4. Dispositif selon l'une des revendications 1 à 2, **caractérisé en ce que** le générateur de force est conçu sous la forme d'un élément magnétique ou électromagnétique agissant sur la vis sans fin en spirale (10, 12, 112, 412).

5. Dispositif selon l'une des revendications précédentes, **caractérisé en ce que** la vitesse relative entre la surface inférieure (26) et la vis sans fin en spirale (10, 12, 112, 412) est ajustable en fonction de la pression de la matière (32, 15, 34).

6. Dispositif selon l'une des revendications précédentes, **caractérisé en ce qu'**une lampe UV pour le durcissement de la matière plastique est montée sur la tête d'impression.

7. Dispositif selon l'une des revendications précédentes, **caractérisé en ce que** la vis sans fin en spirale avec son disque (12) et la surface (26) de la chambre (3) sont coniques.

8. Dispositif selon l'une des revendications précédentes, **caractérisé en ce qu'**au moins une unité d'aspiration (460) est disposée au-dessus de l'orifice de sortie, dans lequel l'unité d'aspiration (460) comporte une chambre (461), laquelle relie par un canal de sortie (462) un espace interne de la tête d'impression contenant la vis sans fin en spirale (10, 12, 112, 412) à l'orifice de sortie, dans lequel un piston (463) relié à un actionneur est disposé coulissant dans la chambre (461).

9. Dispositif selon l'une des revendications précédentes, **caractérisé en ce que** le dispositif comprend au moins un capteur pour la mesure de la hauteur de matière dans l'espace interne (3).

10. Dispositif selon la revendication 9, **caractérisé en ce que** le capteur est un capteur tactile (200).

11. Dispositif selon la revendication 9, **caractérisé en ce que** le capteur est un appareil à ultrasons ou un appareil à infrarouges (450).

12. Dispositif selon l'une des revendications précédentes, **caractérisé par** une unité d'amenée (100) destinée à du gaz pour l'amenée de gaz dans l'espace interne (3).

13. Dispositif selon la revendication 11, **caractérisé en ce qu'**au moins un élément de fermeture (299) pour l'unité d'amenée destinée à de la matière (201) est monté sur la chambre (3) afin de réduire la sortie de gaz.

14. Dispositif selon l'une des revendications précédentes, **caractérisé en ce que** l'orifice de sortie (28, 128, 434) est rotatif.

15. Procédé pour l'alimentation d'une tête d'impression 3D en granulés et/ou liquides, comprenant les étapes consistant à :
- acheminer les granulés et/ou liquides par un canal d'amenée dans une chambre avec une plaque présentant un orifice, de la matière fondue ou liquide obtenue pouvant sortir des granulés et/ou liquides par l'orifice ;
- exercer une force axiale sur une vis sans fin transporteuse en spirale disposée dans la chambre ;
- acheminer la matière en direction de l'orifice ou apporter la matière à nouveau dans une direction opposée à l'orifice par rotation de la vis sans fin en spirale par rapport à la plaque, la vis sans fin en spirale se soulevant contre la force axiale exercée et l'efficacité de la vis sans fin en spirale diminuant en cas de forte pression de la matière.
